# EUROPÄISCHE PATENTANMELDUNG

(11) **EP 4 190 210 A1**
(43) Veröffentlichungstag der Anmeldung: **07.06.2023**
(21) Anmeldenummer: 21212562.9
(22) Anmeldetag: 06.12.2021
(51) Int. Cl.: A47G 1/02, G06F 1/16, H04N 21/431

(54) **SPIEGEL UND EXTERNES ANZEIGEGERÄT MIT SPIEGEL**

(71) Anmelder: MIRROR.technology GdbR, 78244 Gottmadingen (DE)
(72) Erfinder: RÖTTCHER, Oliver, 78269 Volkertshausen (DE); ENGLER, Dovi, 78247 Hilzingen (DE)
(74) Vertreter: Patent- und Rechtsanwälte Behrmann Wagner PartG mbB

(57) **Zusammenfassung**

Die Erfindung betrifft einen Spiegel (10), insbesondere ein Wandspiegel, mit einer reflektierenden Spiegelfläche (12) und vorzugsweise einer integrierten Anzeigeeinheit (14), wobei der Spiegel (10) eine Befestigungsvorrichtung (42) zur ortsfesten Montage und eine Steuereinheit (16) mit Stromversorgungseinheit auf einer Rückseite aufweist. Dabei weist der Spiegel (10) zumindest in einem ersten Teilbereich (18) der Spiegelfläche (12) ein Schnittstellenelement (20) mit Haltemitteln (22) und/oder kabellosen Lademitteln (24) für ein externes Anzeigegerät (26) auf, insbesondere ein Smartphone oder ein Tablet, um das externe Anzeigegerät (26) im montierten Zustand auf der Spiegelfläche (12) zu halten und/oder mittels der Stromversorgungseinheit zu laden.

## Beschreibung

Die vorliegende Erfindung betrifft einen Spiegel nach dem Oberbegriff des Anspruchs 1, sowie ein externes Anzeigegerät mit einem derartigen Spiegel nach dem Anspruch 13.

Aus der DE 10 2019 132 991 A1 ist ein gattungsgemäßer Spiegel, insbesondere ein Wandspiegel, bekannt, der zur Raumgestaltung als ein großflächiges Wandelement mit einer reflektierenden Spiegelfläche ausgestattet ist. Vorzugsweise weist der Spiegel innerhalb der reflektierenden Spiegelfläche einen nicht reflektierenden oder teilreflektierenden Teilbereich auf, in dem eine Anzeigeeinheit in der Form eines LCD-Flachbildschirm und/oder eine Beleuchtung auf der Rückseite des Spiegels angeordnet werden kann. Insbesondere kann so eine Art Smart-Mirror ausgebildet werden, um einem Nutzer Informationen bereitzustellen. Der Spiegel weist eine Befestigungsvorrichtung zur ortsfesten Wandmontage auf und wirkt so als ein großflächiges Wandelement, beispielsweise in einer Badezimmerumgebung. Zur Versorgung der Anzeigeeinheit und/oder der Beleuchtung weist der Spiegel zusätzlich auf einer Rückseite eine Steuereinheit mit Stromversorgungseinheit auf.

Zur Bedienung des Spiegels kann die Anzeigeeinheit mit einer berührungsempfindlichen Touch-Funktion versehen werden, wobei eine Touch-Einheit ohne Lufteinschlüsse auf der Rückseite des Spiegels verbaut werden muss, um eine einwandfreie Bedienung zu gewährleisten. Die Prozesse der Sichtflächenintegration der Anzeigeeinheit und insbesondere das Verkleben der Touch-Einheit sind allerdings sehr kostenintensiv und fertigungstechnisch kompliziert. Des Weiteren kann die Bedienung der Anzeigeeinheit, insbesondere eines Art Smart-TVs aus Sicht einer Bedienperson ungewohnt sein oder eine Benutzerfreundlichkeit einschränken, insbesondere hinsichtlich eines Bedienkonzeptes von auf der Anzeigeeinheit verfügbaren Softwareanwendungen.

Weiterhin bekannt sind externe Bedieneinheiten wie beispielsweise kabellose Fernbedienungen, welche zur Ansteuerung einer Funktionsweise des Spiegels ausgebildet sind. So kann beispielsweise eine extern anbindbare Fernbedienungseinheit oder ein Smartphone aufweisend eine entsprechende Steuerungs-Applikation zur Ansteuerung einer internen Beleuchtung und/oder einer Anzeigeeinheit des Spiegels ausgebildet sein. Insbesondere beim Einsatz im Sanitärbereich ist die Verwendung von derartigen elektronischen Geräten in Kombination mit einem gattungsgemäßen Spiegel jedoch nur eingeschränkt möglich, da entsprechende Schutzvorkehrungen gegen Beschädigungen der elektronischen Geräte insbesondere aufgrund von Kontakt mit Wasser vorzusehen sind.

Der vorliegenden Erfindung liegt die Aufgabe zugrunde, eine verbesserte Vorrichtung bzw. einen verbesserten Spiegel vorzuschlagen, der die vorgehend beschriebenen Nachteile aus dem Stand der Technik adressiert und wenigstens teilweise ausräumt. Insbesondere soll eine verbesserte Vorrichtung bereitgestellt werden, welche eine einfache und intuitive Interaktion einer Bedienperson mit der Vorrichtung ermöglicht, und vorzugsweise gleichzeitig eine einfache Herstellung bzw. Produktion der Vorrichtung ermöglicht. Darüber hinaus adressiert die vorliegende Erfindung weitere Probleme, wie aus der nachfolgenden Beschreibung näher hervorgeht.

Diese Aufgabe wird durch die Gegenstände der unabhängigen Ansprüche gelöst. Vorteilhafte Ausführungsformen sind Gegenstand der Unteransprüche.

Die Erfindung betrifft einen Spiegel, insbesondere ein Wandspiegel, mit einer reflektierenden Spiegelfläche und vorzugsweise einer integrierten Anzeigeeinheit, wobei der Spiegel eine Befestigungsvorrichtung zur ortsfesten Montage und eine Steuereinheit mit Stromversorgungseinheit auf einer Rückseite aufweist. Dabei weist der Spiegel zumindest in einem ersten Teilbereich der Spiegelfläche ein Schnittstellenelement mit Haltemitteln und/oder kabellosen Lademitteln für ein externes Anzeigegerät auf, insbesondere ein Smartphone oder ein Tablet, um das externe Anzeigegerät im montierten Zustand auf der Spiegelfläche zu halten und/oder mittels der Stromversorgungseinheit zu laden.

Unter dem externen Anzeigegerät wird im Rahmen der Erfindung vorzugsweise ein Smartphone oder ein Tablet verstanden, insbesondere ein persönliches Smartphone oder ein Tablet einer Bedienperson des Spiegels.

Weiter sind im Rahmen der Erfindung die Haltemittel vorzugsweise derart ausgebildet, dass das externe Anzeigegerät in einer bestimmten Position auf einer Frontseite des Spiegels auf der Spiegelfläche gehalten wird und durch eine händische Bedienung von der Bedienperson wieder entnommen werden kann. Insbesondere sind im Sinne der Erfindung für eine Montage und Demontage des externen Anzeigegeräts bevorzugt keine Werkzeuge oder ein besonders hoher Krafteinsatz der Bedienperson notwendig.

Unter dem Spiegel wird vorzugsweise ein Wandspiegel verstanden, der eine Befestigungsvorrichtung aufweist, insbesondere zumindest ein Rahmenprofil zur Wandmontage. Weiter bevorzugt kann als Befestigungsvorrichtung auch ein Aufputz- oder Unterputzmaterial verstanden werden, in das der Spiegel ortsfest montierbar sein kann. Alternativ oder zusätzlich kann der Spiegel als ein Einsatz oder ein Teil eines Spiegelschranks, insbesondere eines Badezimmerspiegelschranks, ausgebildet sein.

Alternativ zu einer Wandmontage wäre es auch denkbar, dass der Spiegel, insbesondere ein großflächiger Spiegel, freistehend ausgebildet ist, wobei die Befestigungsvorrichtung bevorzugt zusätzlich eine Standvorrichtung aufweist. Der Spiegel soll insbesondere ein stationärer und somit kein tragbarer bzw. portabler Spiegel sein.

Weiter wird vorzugsweise unter dem Spiegel ein Glaskörper verstanden, der auf der Rückseite beschichtet ist, um die reflektierende Spiegelfläche auszubilden. Ein Reflektionsgrad des Spiegels beträgt vorzugsweise zumindest 85%.

Die Erfindung hat überraschenderweise erkannt, dass durch die Verwendung des Schnittstelleelements das externe Anzeigegerät zumindest zeitweise auf die Spiegelfläche angebracht werden kann, sodass die den Spiegel nutzende Bedienperson gleichzeitig auch das externe Anzeigegerät, insbesondere mit integriertem Bildschirm, freihändig betrachten und/oder einhändig bedienen kann. Hierbei wird zudem das Problem einer eingeschränkten Ablagemöglichkeit des externen Anzeigegeräts insbesondere in Sanitärbereichen gelöst, da das Anzeigegerät durch seine Anordnung an der Spiegeloberfläche vor Kontakt mit Wasser weitgehend geschützt angeordnet ist und insbesondere nicht auf horizontalen Ebenen angeordnet werden muss, welche eher mit Wasser benetzt sein können bzw. auf denen sich eher Wasser ansammelt.

Vorteilhaft kann auch der Spiegel selbst mit dem externen Anzeigegerät bedient werden, insbesondere zusätzlich eine einfache Touch-Bedienungsmöglichkeit bereitstellen. Zusätzlich kann das externe Anzeigegerät geladen werden, um eine zeitlich unbegrenzte Bedienung zu ermöglichen und um eine besonders sichere Auflademöglichkeit, insbesondere in Feuchträumen bereitzustellen. Dabei kann also eine Benutzerfreundlichkeit zur Bedienung des Spiegels und/oder des Anzeigegeräts selbst erhöht werden.

Bevorzugt ist der Spiegel zur Verwendung in Badezimmern oder Feuchträumen spritzwassergeschützt ausgebildet, zumindest mit einer IP24 Zertifizierung. Insbesondere in einer solchen Umgebung ist eine kontaktlose Halte- und/oder Lademöglichkeit vorteilhaft, um eine Beschädigung von elektronischen Komponenten, insbesondere des externen Anzeigegeräts, zu vermeiden.

In einer bevorzugten Ausführungsform ist innerhalb der reflektierenden Spiegelfläche des Spiegels ein nicht reflektierender oder teilreflektierender und bevorzugt blickdurchlässiger zweiter Teilbereich angeordnet, wobei auf der Rückseite des Spiegels in dem zweiten Teilbereich eine Anzeigeeinheit, insbesondere ein elektronisches Display, angeordnet ist und wobei das Schnittstellenelement außerhalb des zweiten Teilbereichs angeordnet ist. Dabei weist der Spiegel also nicht nur ein Schnittstellenelement auf, sondern zusätzlich auch eine Anzeigeeinheit eines Art Smat-Mirrors, wobei das externe Anzeigegerät derart auf der Frontseite der Spiegelfläche gehalten wird, dass die Anzeigeeinheit nicht von dem externen Anzeigegerät abgedeckt ist.

Vorzugsweise weist der Spiegel eine Datenempfängereinheit auf, insbesondere einen Bluetooth oder Wifi Datenempfänger, die mit der Steuereinheit verbunden ist, um drahtlose Datensignale, insbesondere Audio- und/oder Videosignale und/oder Steuerungssignale, von dem externen Anzeigegerät zu empfangen. Das externe Anzeigegerät kann dabei drahtlos und insbesondere auch in einem gehaltenen Zustand auf der Spiegelfläche mit dem Spiegel interagieren und Datensignale an die Datenempfängereinheit senden, insbesondere um Audiosignale und/oder Videosignale mittels des Spiegels abzuspielen und/oder darzustellen.

Besonders bevorzugt weist die Datenempfängereinheit wenigstens zwei Empfangsantennen, insbesondere für eine drahtlose Netzwerkverbindung (WiFi) auf, um einen störungsfreien Empfang zu gewährleisten. Ein entsprechender WiFi Chipsatz ist vorzugsweise für eine Kommunikation über Dual Band Antennen ausgelegt.

Weiter bevorzugt ist die Steuereinheit zur Verarbeitung von Videosignalen ausgebildet, die von dem externen Anzeigegerät, vorzugsweise drahtlos, bereitgestellt sind, insbesondere Bildschirminformationen, um die Videosignale in einer Größe skaliert auf der Anzeigeeinheit des Spiegels darzustellen. Insbesondere weist dabei die Steuereinheit die Datenempfängereinheit auf, um die Videosignale drahtlos zu empfangen.

In diesem Zusammenhang ist besonders bevorzugt, dass die Steuereinheit die Videosignale, insbesondere Bildschirminformationen des externen Anzeigegeräts skaliert, insbesondere vergrößert, und auf der integrierten Anzeigeeinheit darstellt. Vorzugsweise ist die Anzeigeeinheit in einer Bildschirmdiagonale größer als das externe Anzeigegerät ausgebildet. Mit anderen Worten führt die Steuereinheit vorzugsweise ein Art Bildschirmspiegelung (screen-mirroring) durch, wobei identische Bildschirminformationen des externen Anzeigegeräts auf der Anzeigeeinheit des Spiegels dargestellt werden können. Vorteilhafterweise kann eine Bedienperson weiter das Anzeigegerät bedienen und so auch die Darstellung auf der Anzeigeeinheit des Spiegels anpassen, wobei weiter vorteilhaft im Unterschied zu einem Smart-Tv keine Umstellung auf ein unbekanntes Betriebssystem notwendig ist und sich deshalb die Benutzerfreundlichkeit verbessert.

Der Spiegel kann vorzugsweise zusätzlich eine Beleuchtungseinheit auf der Rückseite aufweisen, die vorteilhafterweise analog zu der Anzeigeeinheit in einem zumindest teilweise blickdurchlässigen zweiten Teilbereich angeordnet ist. Vorzugsweise ist die Beleuchtungseinheit als LED oder OLED Beleuchtung ausgebildet.

Weiter zusätzlich können auch weitere elektronische Bauteile in dem Spiegel integriert sein, wie eine Digitaluhr und/oder eine Entfeuchtungseinheit, insbesondere mit einer Heizfolie auf der Rückseite des Spiegels, um die Spiegelfläche von Wasserdampf zu befreien.

Weiter bevorzugt sind der Steuereinheit Skalierungsmittel zum Durchführen einer Größenänderung von auf der Anzeigeeinheit dargestellten Videosignalen und/oder Bildsignalen, insbesondere visuellen Informationen, zugeordnet.

Besonders bevorzugt ist die Steuereinheit derart ausgebildet, dass die Skalierungsmittel mit durch die Spiegelfläche, insbesondere eine gläserne Außenfläche des Spiegels, hindurch wirkenden Anwesenheits- und/oder Bewegungsdetektionsmitteln zusammenwirken, insbesondere als Reaktion auf eine Annäherung einer Person an die Spiegelfläche die Größenänderung bewirken und einen entsprechenden Skalierungswert einstellen. Vorzugsweise wirken die Anwesenheits- und/oder Bewegungsdetektionsmittel durch einen nicht reflektierenden oder teilreflektierenden Teilbereich der Spiegelfläche hindurch.

Mit den Anwesenheits- und/oder Bewegungsdetektionsmitteln kann vorteilhafterweise eine Bewegungs- und/oder Anwesenheitserfassung (etwa bezogen auf eine Bedienperson) vor dem Spiegel implementiert werden. Eine derartige Sensorik, etwa realisiert mittels gesonderter, weiter bevorzugt unsichtbar hinter der Wandplatte vorgesehener Sensoren, alternativ etwa auch realisiert durch Modifikation der Detektormittel, ermöglicht dann eine Reaktion auf Position und/oder Bewegungsmodi der anzusprechenden Person vor dem Spiegel. Es hat sich diesbezüglich als besonders elegante Weiterbildung herausgestellt, die elektronische Bilddarstellung auf der Anzeigeeinheit abhängig zu machen von derartigen positions- bzw. bewegungsspezifischen Daten, wobei die weiterbildungsgemäß vorgesehenen Skalierungsmittel eine derartige Bild-Größenveränderung, etwa in Abhängigkeit von einem unmittelbaren Abstand einer Person, vornehmen können. So könnte die Anzeigeeinheit beispielsweise eine Bilddiagonale von 15 Zoll aufweisen, wenn die Bedienperson direkt vor dem Spiegel steht, damit gleichzeitig die Spiegelfläche z.B. zum Rasieren nutzbar ist, als auch simultan die Informationen der Anzeigeeinheit angezeigt sind. Wenn sich die Bedienperson dann von dem Spiegel wegbewegt und die Badewanne benutzt, könnte die Bilddiagonale sich auf vorzugsweise 42 Zoll vergrößern und bevorzugt den gesamten zweiten Teilbereich ausfüllen, damit die in der Anzeigeeinheit enthaltenen Informationen auch aus größerer Entfernung gut sichtbar sind.

In der beschriebenen Ausführungsvariante mit Detektormitteln zur Bildskalierung ist die Spiegelfläche vorzugsweise ein semitransparenter bzw. halbdurchlässiger Spiegel, vorzugsweise mit einer Reflexion von 60% und Transmission von 40%, damit der zweite Teilbereich bei kleiner Bilddiagonale im restlichen Bereich vorzugsweise auch eine Spiegelfunktion wiedergibt. Wenn die Anzeigeeinheit komplett ausgeschaltet ist, entsteht ebenso eine homogene Spiegelfläche.

Alternativ oder zusätzlich können die Skalierungsmittel auch, vorzugsweise halbautomatisch, mit einem Tastenelement, insbesondere eine Toucheinheit im Spiegel und/oder dem externen Anzeigegerät, aktiviert und/oder ein Skalierungswert eingestellt werden.

Vorzugsweise weist die Steuereinheit mit Skalierungsmitteln eine Speichereinheit, insbesondere eine Firmware auf, um Skalierungswerte abzuspeichern.

In einer weiteren bevorzugten Ausführungsform weisen die Haltemittel des Schnittstellenelements zumindest ein erstes magnetisches oder metallisches Halteelement auf der Rückseite des Spiegels auf, um mit dem externen Anzeigegerät und/oder einer Haltevorrichtung des externen Anzeigegeräts auf der Spiegelfläche magnetisch zusammenzuwirken.

In diesem Zusammenhang weist das externe Anzeigegerät und/oder die Haltevorrichtung des externen Anzeigegeräts, insbesondere eine Smartphone- oder Tablethülle oder eine Halteschale, vorzugsweise ein zweites magnetisches oder metallisches Halteelement auf. Zum Beispiel kann auf der Rückseite des Spiegels ein erstes magnetisches Halteelement angeordnet sein, das mit einem zweiten metallischen Halteelement des externen Anzeigegeräts zusammenwirkt, oder in einer umgekehrt Kombination. Beispielsweise kann als Haltemittel eine Metallplatte als erstes metallisches Halteelement auf die Rückseite des Spiegels geklebt werden, auf der dann ein mit einem magnetischen zweiten Halteelement versehenes Smart Phone oder Tablet anhaften kann. Vorteilhafterweise kann so ein kontaktloses Halten des externen Anzeigegeräts auf der Spiegelfläche ermöglicht werden, wobei das externe Anzeigegerät jederzeit reversibel entnommen werden kann, ohne dabei die Spiegelfläche einzuschränken oder zu beschädigen.

Alternativ oder zusätzlich können die Haltemittel auch Klebeelemente aufweisen, insbesondere selbstklebende Flächen, um das externe Anzeigegerät in einer bevorzugten stoffschlüssigen Verbindung auf der Spiegelfläche, insbesondere eine Spiegeloberfläche, zu halten. Dabei sind die Klebeelemente vorteilhafterweise auf der Spiegelfläche, insbesondere transparent, ausgebildet und fixieren das externe Anzeigegerät permanent oder zumindest zeitweise. Besonders bevorzugt kann die Haltevorrichtung des externen Anzeigegeräts mit einem Klebeelement mit der Spiegelfläche verbunden sein, insbesondere eine Halteschale, wobei das externe Anzeigegerät auch temporär und ohne Krafteinwirkung oder Beschädigung auf der Spiegelfläche gehalten werden kann.

Vorzugsweise sind die Lademittel des Schnittstellenelements auf der Rückseite des Spiegels angeordnet und als zumindest ein drahtloser Leistungslader ausgebildet, insbesondere mit Spulenmitteln zum induktiven Laden des externen Anzeigegeräts. Bevorzugt weist das externe Anzeigegerät auch einen Akkumulator auf, der induktiv mittels den Lademitteln aufladbar ist.

Die Lademittel und/oder die Haltemittel sind vorzugsweise an wenigstens zwei festen Positionen auf der Rückseite des Spiegels angeordnet, vorzugsweise in Ecken der Spiegelfläche. Vorteilhafterweise kann das externe Anzeigegerät individuell entsprechend des Wunsches der Bedienperson an mehreren Positionen geladen werden, insbesondere an Positionen, die eine Betrachtung einer Bedienperson in dem Spiegel nicht stören und/oder weitere integrierte Funktionen, insbesondere die integrierte Anzeigeeinheit und/oder die integrierte Beleuchtungseinheit des Spiegels abdecken.

Besonders bevorzugt sind durch induktive Lademittel auf der Rückseite des Spiegels keine Ladekabel auf der Spiegelfläche oder einer Umgebung des Spiegels sichtbar. So kann das externe Anzeigegerät vorteilhafterweise permanent auf der Spiegelfläche verbleiben, ohne dass das externe Anzeigegerät an eine separate Ladestation angeschlossen werden muss.

In einer bevorzugten Ausführungsform ist eine Markierung, insbesondere ein Symbol, in der Spiegelfläche eingearbeitet, um der Bedienperson eine Position der Ladestation für das externe Anzeigegerät anzugeben. Vorzugsweise ist die Markierung mittels einer Entschichtung, Sandstrahlung und/oder Bedruckung in der Spiegelfläche eingebracht.

Vorzugsweise sind die Haltemittel großflächig oder zumindest angrenzend an die Lademittel auf der Rückseite des Spiegels ausgebildet, wobei die Haltemittel einen Ausschnittsbereich ausbilden, in denen die Lademittel angeordnet sind, um eine Abdecken und eine Störung der Lademittel, insbesondere durch magnetische oder metallische Haltemittel, zu vermeiden. Insbesondere großflächige Haltemittel können als eine metallische oder magnetische Folie oder Platte ausgebildet sein und vorzugsweise auf die Rückseite des Spiegels aufgeklebt oder als Beschichtung aufgebracht werden, insbesondere schichtförmig aufgedampft werden. Vorteilhafterweise kann so eine Bedienperson das externe Anzeigegerät beliebig auf der Spiegelfläche anbringen und selbständig eine Halteposition auswählen.

Besonders bevorzugt weist der Spiegel eine großflächige Spiegelfläche auf, insbesondere eine Spiegelfläche von wenigstens 0,5m × 1m, weiter bevorzugt von wenigstens 1m × 1m, wobei der Spiegel insbesondere ein Wandelement ausbildet und ortsfest angeordnet ist.

Weiter bevorzugt ist eine Dicke des Spiegels oder ein Abstand zwischen der Spiegelfläche und der Rückseite des Spiegels derart ausgebildet und/oder die Haltemittel derart ausgelegt, dass eine Haltekraft der Haltemittel in einer Ebene der Spiegelfläche zumindest einem Gewicht des externen Anzeigegeräts entspricht. Vorteilhafterweise ist die Haltekraft größer als das Gewicht des externen Anzeigegeräts ausgelegt, um ein Verrutschen des externen Anzeigegeräts auch bei Vibrationen einer integrierten Audioausgabeeinheit zu vermeiden. Besonders bevorzugt beträgt ein Abstand zwischen der Spiegelfläche, insbesondere der Frontseite des Spiegels, und einer Rückseite des montierten externen Anzeigegeräts kleiner 15mm.

In einer besonders bevorzugten Ausführungsform ist die Steuereinheit zur Verarbeitung von Audiosignalen ausgebildet, die von dem externen Anzeigegerät, vorzugsweise drahtlos, bereitgestellt sind, wobei der Spiegel einen mit der Steuereinheit verbundenen Audioverstärker aufweist, um das Audiosignal mittels einer internen und/oder externen Audioausgabeeinheit, insbesondere einem Lautsprecher, abzuspielen. Vorzugsweise weist dabei die Steuereinheit die Datenempfängereinheit auf, um die Audiosignale drahtlos, insbesondere mit einem Bluetooth Audioempfänger zu empfangen.

Vorzugsweise ist der Audioverstärker zur Übertragung des Audiosignals auf einen passiven Lautsprecher ausgebildet, um bevorzugt Audiosignale von den externen Anzeigegeräten zu verarbeiten, die keinen eingebauten Verstärker aufweisen. Der Audioverstärker weist vorzugsweise eine Leistung von wenigstens 2x 5W auf.

Die interne Audioausgabeeinheit ist vorzugsweise als ein Lautsprecher ausgebildet, der besonders bevorzugt entweder im Rahmen des Spiegels verbaut ist und/oder als Flächenlautsprecher auf der Rückseite des Spiegels verklebt ist. Weiter bevorzugt kann die Audioausgabeeinheit innerhalb der Anzeigeeinheit des Spiegels integriert sein, wobei vorzugsweise Audio- und Videosignale von dem externen Anzeigegerät mittels der Anzeigeeinheit abgespielt und dargestellt werden.

Zusätzlich oder alternativ zu der internen Audioausgabeeinheit kann ein externer Lautsprecher, insbesondere ein Deckenlautsprecher mit dem Spiegel verbunden sein, um das Audiosignal abzuspielen.

In einer bevorzugten Ausführungsform ist die Steuereinheit zur Verarbeitung von Steuersignalen ausgebildet, die von dem externen Anzeigegerät, vorzugsweise drahtlos, bereitgestellt sind, vorzugsweise Steuersignale einer softwarebasierten Applikation, um unmittelbar elektronische Geräte des Spiegels zu steuern, insbesondere eine Ladeleistung der Lademittel, eine Lautstärke einer Audioausgabeeinheit und/oder der dargestellten Informationen auf der Anzeigeeinheit.

Vorteilhafterweise sind die zusätzlichen elektronischen Bauteile wie die Beleuchtungseinheit, die Digitaluhr und/oder die Entfeuchtungseinheit, insbesondere eine Spiegelheizung, ebenfalls mit der Steuereinheit verbunden und können vorteilhafterweise mittels des externen Anzeigegeräts und entsprechenden Steuersignalen gesteuert werden, insbesondere eine Beleuchtungsintensität oder -farbe der Beleuchtungseinheit und/oder eine Aktivierung der Entfeuchtungseinheit. Alternativ oder zusätzlich können die zusätzlichen elektronischen Bauteile wie die Beleuchtungseinheit, die Digitaluhr und/oder die Entfeuchtungseinheit über Tasten oder Schalter am oder im Spiegel gesteuert werden.

Vorzugsweise weist die Steuereinheit mit Stromversorgung, die Haltemittel und/oder die Lademittel des Spiegels Verbindungsmittel, insbesondere stoffschlüssige Verbindungsmittel, auf, um einen vorhandenen Spiegel nachzurüsten. Insbesondere können die Verbindungsmittel als eine Klebeschicht ausgebildet sein, um die Steuereinheit mit Stromversorgung, die Haltemittel und/oder die Lademittel des Spiegels auf der Rückseite eines vorhandenen Spiegels aufzukleben. Vorteilhafterweise kann so ein Art Selbst-Bausatz für einen Spiegel bereitgestellt werden, um insbesondere auch einer Benutzerperson ohne handwerkliche Kenntnisse eine Nachrüstung zu ermöglichen.

Weiter betrifft die Erfindung bevorzugt auch ein externes Anzeigegerät mit einem zuvor beschriebenen Spiegel, wobei das externe Anzeigegerät mit zweiten metallischen oder magnetischen Halteelementen verbunden ist und/oder eine Haltevorrichtung aufweist, um mit Haltemitteln des Spiegels zusammenzuwirken und auf der Spiegelfläche gehalten zu werden. Vorzugsweise sind die zweiten Halteelemente innerhalb des externen Anzeigegerät integriert oder insbesondere auf einer Rückseite einer Anzeigefläche des externen Anzeigegeräts angeordnet, besonders bevorzugt stoffschlüssig aufgeklebt. Zusätzlich oder alternativ kann das externe Anzeigegerät auch die Haltevorrichtung aufweisen, insbesondere eine Hülle, die vorzugsweise selbst mit zweiten Halteelementen verbunden ist.

Alternativ wäre es auch denkbar, die Haltevorrichtung oder das externe Anzeigegerät mit stoffschlüssigen Haltemitteln des Spiegels zu verbinden.

Das externe Anzeigegerät weist vorzugsweise einen Akkumulator auf, der induktiv mittels Lademitteln des Spiegels aufladbar ist. Vorteilhafterweise kann das externe Anzeigegerät im montierten Zustand auf der Spiegelfläche mit den Lademitteln des Spiegels zusammenwirken und kabellos geladen werden.

In einem weiteren Aspekt betrifft die Erfindung ein Verfahren zur Bedienung eines zuvor beschriebenen Spiegels, wobei die Bedienperson ein Datensignal, insbesondere ein Audio- und/oder ein Video- und/oder ein Steuersignal, mittels des externen Anzeigegeräts auswählt und/oder erzeugt und an die Steuereinheit des Spiegels sendet, insbesondere mittels einer softwarebasierten Applikation auf einem Smartphone, um unmittelbar die Steuereinheit und damit verbundene elektronische Geräte des Spiegels zu steuern, insbesondere eine Ladeleistung der Lademittel, eine Lautstärke einer Audioausgabe und/oder der dargestellten Informationen auf einer Anzeigeeinheit.

Vorzugsweise weist das externe Anzeigegerät zur Ausführung des Verfahrens ein Computerprogramm mit Programmcode-Mitteln auf, das auf einem computerlesbaren Datenträger gespeichert ist, um das Datensignal auszuwählen und/oder zu erzeugen und zu versenden, wenn das Computerprogrammprodukt auf einem Computer oder auf einer entsprechenden Rechnereinheit, insbesondere einer Applikation auf einem Smartphone oder Tablet, ausgeführt wird.

Vorzugsweise weist auch die Steuereinheit des Spiegels eine Rechnereinheit auf, um das empfangene Datensignal zu verarbeiten und entsprechend der Steuerung auf dem externen Anzeigegerät auszuführen.

Zusätzlich kann es bevorzugt denkbar sein, dass zur Bedienung des zuvor genannten Spiegels die Bedienperson die folgenden Schritte ausführt, wobei vorzugsweise von der angegebenen Reihenfolge abgewichen werden kann. In einem bevorzugten ersten Schritt wird das externe Anzeigegerät auf das Schnittstellenelement in dem zumindest einen ersten Teilbereich der Spiegelfläche angebracht, derart, dass ein Bildschirm des externen Anzeigegeräts sichtbar bleibt. In einem bevorzugten zweiten Schritt wird das externe Anzeigegerät in einer Ebene der Spiegelfläche ausgerichtet, um erste und zweite magnetische oder metallische Halteelemente der Haltemittel des Spiegels und des externen Anzeigegeräts zumindest teilweise senkrecht zu der Ebene der Spiegelfläche in eine Überlappung zu bringen. Gleichzeitig oder in einem bevorzugten dritten Schritt wird das externe Anzeigegerät derart ausgerichtet, dass das externe Anzeigegerät sich zumindest teilweise senkrecht zu der Ebene der Spiegelfläche in eine Überlappung mit kabellosen Lademitteln auf der Rückseite des Spiegels befindet.

Weitere Vorteile und Einzelheiten der Erfindung ergeben sich aus der nachfolgenden Beschreibung bevorzugter Ausführungsformen der Erfindung sowie anhand von rein schematischen Zeichnungen.

Es zeigen:
- Fig. 1a:: eine Ansicht auf eine Spiegelfläche eines Spiegels mit einer Bedienperson und einem externen Anzeigegerät,
- Fig. 1b:: eine Ansicht gemäß der Fig. 1a mit dem externen Anzeigegerät im montierten Zustand,
- Fig. 2a:: eine rückseitige Ansicht auf einen Spiegel gemäß der Fig. 1a mit Schnittstellenelement, großflächigen Haltemitteln und Lademitteln, sowie Audioausgabeeinheit bzw. Lautsprecher,
- Fig. 2b:: eine Ansicht gemäß der Fig. 2a mit Haltemitteln angrenzend an die Lademittel,
- Fig. 2c:: eine Ansicht gemäß der Fig. 2a mit Schnittstellenelementen an mehreren Positionen,
- Fig. 3a:: eine rückseitige Ansicht auf einen Spiegel gemäß der Fig. 2b mit einer integrierten Anzeigeeinheit,
- Fig. 3b:: eine frontseitige Ansicht auf eine Spiegelfläche und einen Spiegel gemäß der Fig. 3a mit einer integrierten Anzeigeeinheit und einem externen Anzeigegerät,
- Fig. 3c:: eine Ansicht auf eine Spiegelfläche gemäß der Fig. 3b mit dem externen Anzeigegerät im montierten Zustand,
- Fig. 4:: eine Ansicht auf einen Spiegel gemäß der Fig. 2b mit weiteren integrierten elektronischen Bauteilen,
- Fig. 5:: eine Ansicht auf ein externes Anzeigegerät mit zweiten Halteelementen.

Gleiche Elemente beziehungsweise Elemente mit gleicher Funktion sind in den Figuren mit den gleichen Bezugsziffern versehen.

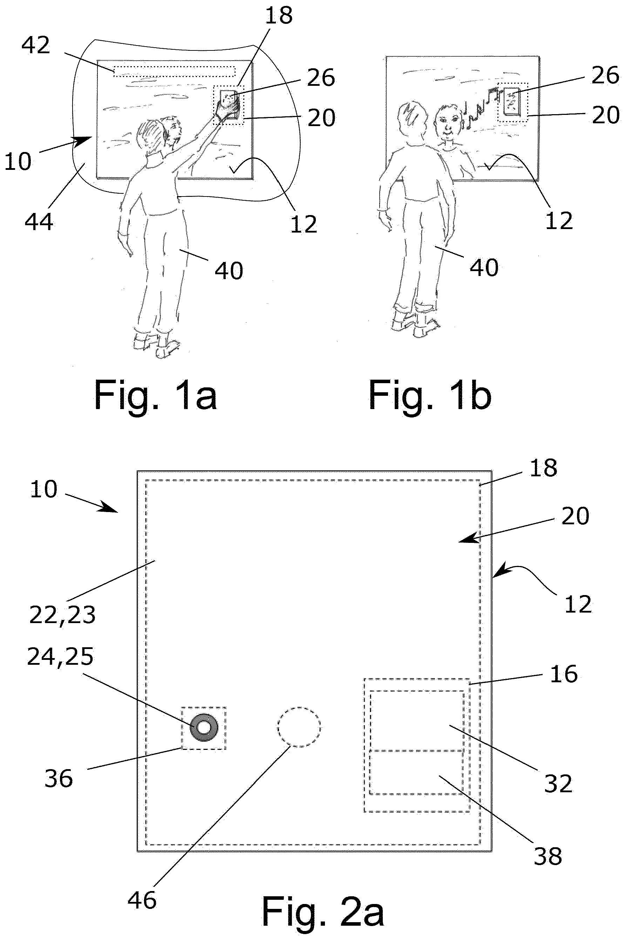

Die Fig.1a und die Fig. 1b zeigen einen Spiegel 10 mit einer reflektierenden Spiegelfläche 12 auf einer Frontseite, insbesondere einen großflächigen Wandspiegel, der auf einer Rückseite eine Befestigungsvorrichtung 42 aufweist, die insbesondere zur ortsfesten Montage an einer Wand 44 eines Innenraums ausgebildet ist. Beispielsweise kann der Spiegel 10 in einer Sanitärumgebung, insbesondere einem Badezimmer aufgehängt werden. Vorzugsweise kann eine Bedienperson 40 ein externes Anzeigegerät 26, insbesondere ein Smartphone oder ein Tablet, auf der Spiegelfläche 12 anbringen. Vorzugsweise weist der Spiegel 10 ein Schnittstellenelement 20 auf, um das externe Anzeigegerät 26 in zu mindestens einem ersten Teilbereich 18 der Spiegelfläche 12 zu halten. Vorteilhafterweise kann die die Bedienperson 40, wie in der Fig. 1b dargestellt, freihändig sich selbst in dem Spiegel 10 und gleichzeitig auch einen Bildschirminhalt auf dem externen Anzeigegerät 26 betrachten.

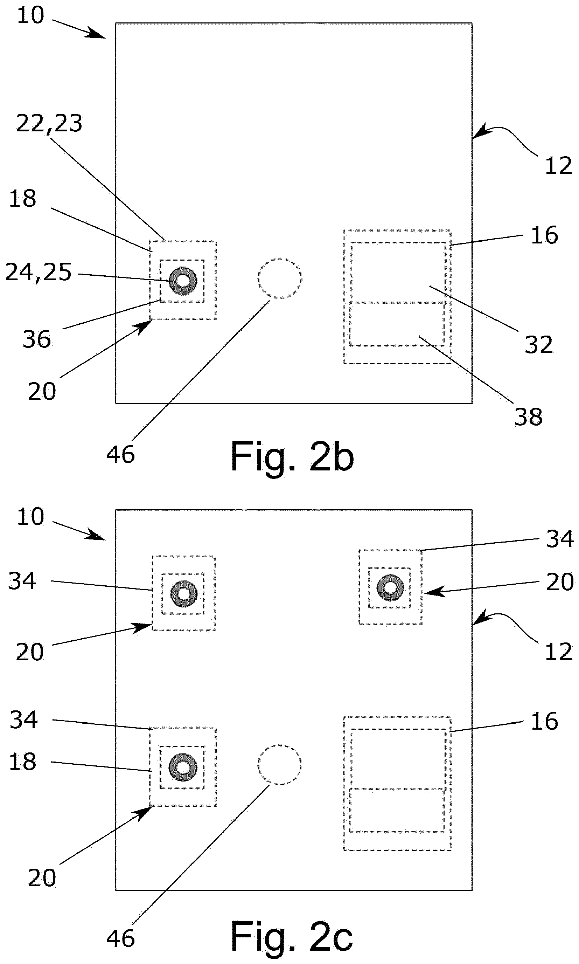

In der Fig. 2a und der Fig. 2b ist das Schnittstellenelement 20 auf der Rückseite des Spiegels 10 und der Spiegelfläche 12 schematisch dargestellt. Das Schnittstellenelement 20 weist Haltemittel 22 zum Halten des externen Anzeigegerät 26 auf der Spiegelfläche 12 und/oder kontaktlose Lademittel 24 auf, um das externe Anzeigegerät 26 im gehaltenen Zustand auf der Spiegelfläche 12 elektronisch zu laden.

Die Haltemittel 22 können gemäß der Fig. 2a in dem ersten Teilbereich 18 vorzugsweise großflächig und im Wesentlichen bis zu einem Rand des Spiegels 10 ausgebildet sein. Dabei kann die Bedienperson 40 an einer beliebigen Position das externe Anzeigegerät 26 auf der Spiegelfläche 12 anbringen. Besonders bevorzugt weisen die Haltemittel 22 des Schnittstellenelements 20 zumindest ein erstes magnetisches oder metallisches Halteelement 23 auf, um mit dem externen Anzeigegerät 26 und/oder einer Haltevorrichtung des externen Anzeigegeräts 26 auf der Spiegelfläche 12 magnetisch und vorzugsweise kontaktlos zusammenzuwirken. Das erste Halteelement 23 kann insbesondere als eine Metallplatte, insbesondere aufgeklebt, oder als eine magnetische oder metallische Schicht, insbesondere aufgedampft oder verklebt, sein.

Weiter bevorzugt weisen die Haltemittel 22, insbesondere in dem ersten Teilbereich 18, einen Ausschnittsbereich 36 auf, in dem die Lademittel 24 angeordnet werden können. Besonders bevorzugt sind die Lademittel 24 als eine Spule 25 ausgebildet, um von der Rückseite des Spiegels 10 ein kontaktloses Laden des externen Anzeigegerät 26, insbesondere ein induktives Laden eines Akkumulators des externen Anzeigegeräts 26, zu ermöglichen. Vorteilhafterweise sind so keine Ladekabel sichtbar und das externe Anzeigegerät 26 muss nicht mittels separaten Lademitteln verbunden werden. Alternativ können die Haltemittel 22 gemäß der Fig. 2b auch unmittelbar um die Lademittel 24 herum ausgebildet sein, um vorzugsweise ein Halten und ein gleichzeitiges Laden des externen Anzeigegerät 26 an zumindest einer Position zu ermöglichen. Bevorzugt können erste magnetische Halteelemente 23 plattenförmig und kostengünstig um die Lademittel 24 herum angeordnet werden. Weiter bevorzugt überlappen sich die Lademittel 24 nicht mit ersten metallischen oder magnetischen Halteelemente 23 innerhalb des Ausschnittsbereichs 36.

Gemäß der Fig. 2c können die Haltemittel 22 und/oder die Lademittel 24, insbesondere mit ersten metallischen oder magnetischen Halteelemente 23, an zumindest zwei festen Positionen 34, bevorzugt den hier schematisch dargestellten drei Positionen 34 in Ecken der Spiegelfläche 12 angeordnet sein, um vorteilhafterweise der Bedienperson 40 mehrere Halte- und/oder Lademöglichkeiten bereitzustellen. Alternativ wäre es auch denkbar, dass an den zumindest zwei festen Positionen 34 vorzugsweise selbstklebende Haltemittel 22 ausgebildet sind, um das externe Anzeigegerät 26 dauerhaft oder zumindest zeitweise zu fixieren.

Wie in der Fig. 2a und der Fig. 2b weiter dargestellt ist, weist der Spiegel 10 auf der Rückseite vorzugsweise zusätzlich eine Steuereinheit 16 mit Stromversorgungseinheit auf, wobei die Stromversorgungseinheit insbesondere mit den Lademitteln 24 verbunden ist, um das externe Anzeigegerät 26 im montierten Zustand zu laden. Besonders bevorzugt weist die Steuereinheit 16 zusätzlich eine Datenempfängereinheit 32, insbesondere einen Bluetooth oder Wifi Datenempfänger, auf, um drahtlos Datensignale, insbesondere Audio-, Video- und/oder Steuersignale, zu empfangen.

Zusätzlich kann der Spiegels 10 einen Audioverstärker 38 aufweisen, der mit der Steuereinheit 16 und besonders bevorzugt mit einer Audioausgabeeinheit 46 verbunden ist, wobei die Steuereinheit 16 bevorzugt zur Verarbeitung von Audiosignalen ausgebildet sein kann, die von dem externen Anzeigegerät 26, insbesondere drahtlos, bereitgestellt sind. Vorzugsweise kann so die Bedienperson 40 nicht nur das externe Anzeigegerät 26 auf der Spiegelfläche 12 anbringen, sondern auch mit elektronischen Komponenten des Spiegels 10 interagieren, um zum Beispiel ein Audiosignal mittels der Audioausgabeeinheit 46 des Spiegels 10, insbesondere ein interner und/oder externer Lautsprecher, abzuspielen.

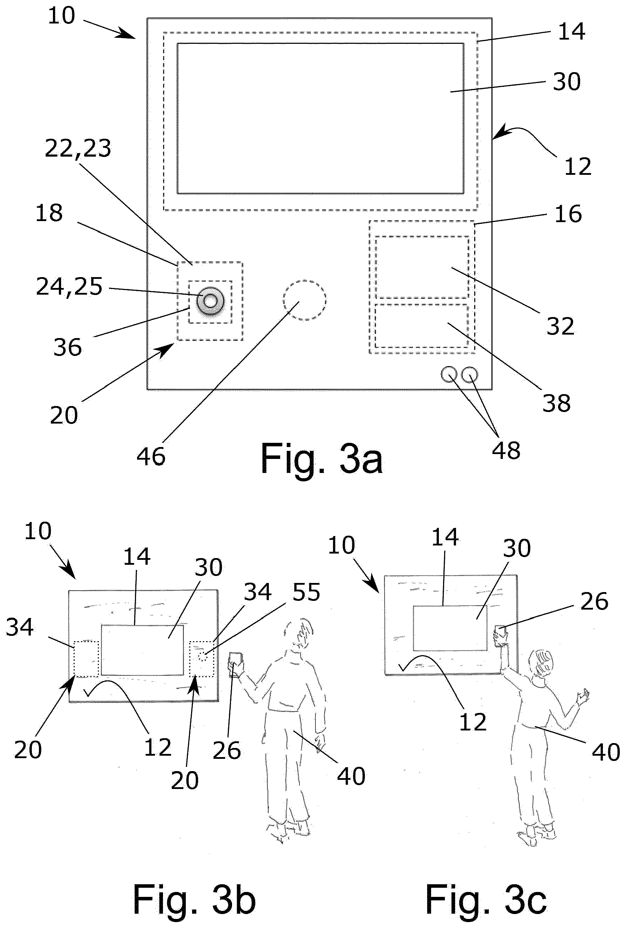

In der Fig. 3a, der Fig. 3b und der Fig. 3c ist eine weitere bevorzugte Ausführungsform des Spiegels 10 dargestellt, wobei innerhalb der reflektierenden Spiegelfläche 12 ein nicht reflektierender oder teilreflektierender und bevorzugt blickdurchlässiger zweiter Teilbereich 30 angeordnet ist und auf der Rückseite des Spiegels 10 überlappend mit dem zweiten Teilbereich 30 eine Anzeigeeinheit 14, insbesondere ein elektronisches Display, angeordnet ist. Die Anzeigeeinheit 14 ist vorzugsweise größer als der nicht reflektierende oder teilreflektierende zweite Teilbereich 30 innerhalb der Spiegelfläche 12 ausgebildet. Dabei ist die Anzeigeeinheit 14 bevorzugt derart angeordnet, dass innerhalb des zweiten Bereichs 30 nur die Bildinformationen des Displays der Anzeigeeinheit 14 sichtbar sind. Mit anderen Worten ist/sind vorzugsweise ein Rahmen und/oder Haltepunkte der Anzeigeeinheit 14 nicht innerhalb des zweiten Teilbereichs 30 in der Spiegelfläche 12 sichtbar, insbesondere von der Frontseite des Spiegels 10 aus sichtbar.

Bevorzugt ist das Schnittstellenelement 20 mit Haltemitteln 22 in dem ersten Teilbereich 18 außerhalb des zweiten Teilbereichs 30 angeordnet, um insbesondere eine Überlappung der Haltemittel 22 und/oder ein montiertes externes Anzeigegerät 26 mit der Anzeigeeinheit 14 zu vermeiden. Besonders bevorzugt sind die Haltemittel 22 in unmittelbarer Umgebung zu den Lademitteln 24 angeordnet, um gemäß der Fig. 3b an einer oder mehreren festen Position 34 das Schnittstellenelement 20 für das externe Anzeigegerät 26 auszubilden.

Vorzugsweise ist gemäß der Fig. 3b eine Markierung 55 in der Spiegelfläche 12 ausgebildet, um der Bedienperson 40 die feste Position 34 aufzuzeigen. Besonders bevorzugt ist die Markierung 55 in der Spiegelfläche 12 sichtbar auf der Rückseite oder der Frontseite des Spiegels 10 ausgebildet.

Besonders bevorzugt ist die Steuereinheit 16 des Spiegels 10 der Fig. 3a zur Verarbeitung von Videosignalen ausgebildet, die von dem externen Anzeigegerät 26, vorzugsweise drahtlos, bereitgestellt sind. Vorzugsweise können so Videosignale, insbesondere Bildschirminformationen, von dem externen Anzeigegerät 26 auf die Anzeigeeinheit 14 des Spiegels 10 übertragen und in einer Größe skaliert dargestellt werden.

Vorteilhafterweise kann gemäß den Fig. 3b und Fig. 3c die Bedienperson 40 eine bekannte Ansicht auf dem externen Anzeigegerät 26 vorzugsweise identisch und vergrößert auf der Anzeigeeinheit 14 anzeigen lassen, wobei das externen Anzeigegerät 26 vorzugsweise auch durch den Spiegel 10 gehalten wird. Mit anderen Worten kann die Anzeigeeinheit 14 vorzugsweise als eine Art Spiegelbildschirm (mirror screen) verwendet werden, um den identischen Bildschirminhalt, insbesondere Applikationen auf einem Smartphone oder Tablet, anzuzeigen. Vorteilhafterweise kann der Spiegel 10 durch die Kopplung der Anzeigeeinheit 14 mit dem externen Anzeigegerät 26 als eine Art Smart-Tv verwendet werden, wobei die Bedienperson 40 eine bekannte Benutzeroberfläche entsprechend dem externen Anzeigegerät 26 vorfindet. Die Bedienung der Anzeigeeinheit erfolgt hierbei vorzugsweise über das externe Anzeigegerät 26, das in dieser Ausführung dann neben der Datenbereitstellung auch als Fernbedienung fungiert.

Vorzugsweise zusätzlich zu der Anzeigeeinheit 14 weist der Spiegel 10 der Fig. 3a ebenfalls eine Audioausgabeeinheit 46 mit Audioverstärker 38 auf, um zusätzlich zu den Videosignalen mittels der Steuereinheit 16 auch Audiosignale zu verarbeiten und abzuspielen.

Zusätzlich können gemäß der Fig. 3a Bedienelemente 48, insbesondere Touch-Knöpfe, in der Spiegelfläche 12 integriert sein, um eine manuelle Bedienung, insbesondere eine händische Bedienung der Bedienperson 40, zu ermöglichen. Vorzugsweise kann mittels der Bedienelemente 48 die Steuereinheit 16 gesteuert werden und damit zum Beispiel die Anzeigeeinheit 14 und/oder die Audioausgabeeinheit 46, insbesondere zur Lautstärkesteuerung.

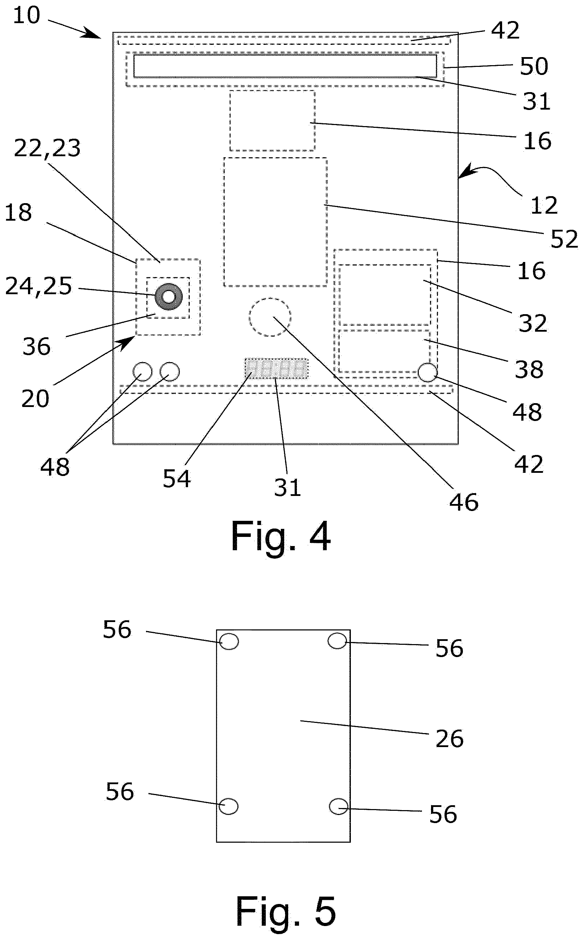

In der Fig. 4 sind zusätzliche elektronische Bauelemente aufgezeigt, die vorzugsweise auf der Rückseite des Spiegels 10 angeordnet und integriert werden können. Zusätzlich oder alternativ kann in einem nicht reflektierenden oder teilreflektierenden und blickdurchlässigen dritten Teilbereich 31 eine Beleuchtungseinheit 50 auf der Rückseite des Spiegels 10 angeordnet werden. Falls der Spiegel 10 analog zu der Fig. 3a eine hier nicht dargestellte Anzeigeeinheit 14 aufweist, so überlappt der drittel Teilbereich 31 vorzugsweise nicht mit dem ersten Teilbereich 30 für die Anzeigeeinheit 14.

Besonders bevorzugt weist der Spiegel 10 auch eine Entfeuchtungseinheit 52, vorzugsweise eine Heizfolie, auf der Rückseite auf. Auch wäre es denkbar eine Digitaluhr 54 in dem Siegel 10, vorzugsweise ebenfalls in einem weiteren blickdurchlässigen dritten Teilbereich 31 und auf der Rückseite, zu integrieren. Besonders bevorzugt ist die Steuereinheit 16 zur Steuerung der Beleuchtungseinheit 50, der Entfeuchtungseinheit 52 und/oder der Digitaluhr 54 ausgebildet, wobei vorzugsweise die Steuereinheit 16 mittels des externen Anzeigegerät 26, insbesondere mittels einer softwarebasierten Applikation, steuerbar ist. Vorteilhafterweise kann mittels des externen Anzeigegeräts 26 eine Uhrzeit, eine Beleuchtungsintensität und/oder Beleuchtungsfarbe der Beleuchtungseinheit 50 und/oder ein Ein-/Ausschalten der Entfeuchtungseinheit 52 gesteuert werden. Vorzugsweise zusätzlich kann die Steuereinheit 16 auch mittels Bedienelementen 48 in der Spiegelfläche 12, insbesondere Touch-elemente, gesteuert werden, wobei vorzugsweise zusätzlich zu Bedienelementen 48 für eine Steuerung einer Audioausgabe auch weitere Bedienelemente 48 zur Steuerung der Entfeuchtungseinheit 52 und/oder der Beleuchtungseinheit 50 ausgebildet sind.

In der Fig. 5 ist das externe Anzeigegerät 26 mit zweiten Halteelementen 56, insbesondere auf einer Rückseite des externen Anzeigegeräts 26, dargestellt. Dabei sind die zweiten Halteelemente 56 vorzugsweise an zumindest zwei festen Positionen, bevorzugt den hier dargestellten vier festen Positionen in Ecken des externen Anzeigegeräts 26 angeordnet.

Besonders bevorzugt handelt es sich um metallische oder magnetische zweite Halteelemente 56, die im montierten Zustand des externen Anzeigegeräts 26 auf der Spiegelfläche 12 mit entsprechend magnetischen oder metallischen ersten Halteelementen 23 des Spiegels 10 zusammenwirken. Vorzugsweise kann durch die Anordnung der zweiten Halteelementen 56 in den Ecken eine Störung der induktiven Ladefunktion eines Akkumulators des externen Anzeigegeräts 26 vermieden werden.

Alternativ wäre es auch denkbar, dass die zweiten Halteelemente 56 auf einer Haltevorrichtung des externen Anzeigegeräts 26 angeordnet sind, insbesondere eine Smartphone- oder Tablethülle oder eine Halteschale.

### Bezugszeichenliste

- 10: Spiegel
- 12: reflektierende Spiegelfläche
- 14: Anzeigeeinheit
- 16: Steuereinheit
- 18: erster Teilbereich der Spiegelfläche
- 20: Schnittstellenelement
- 22: Haltemittel
- 23: erstes Halteelemente
- 24: Lademittel
- 25: Spulenmittel
- 26: externes Anzeigegerät
- 30: zweiter Teilbereich der Spiegelfläche
- 31: dritter Teilbereich der Spiegelfläche
- 32: Datenempfängereinheit
- 34: feste Positionen der Halte- und/der Lademittel
- 36: Ausschnittsbereich der Haltemittel
- 38: Audioverstärker
- 40: Bedienperson
- 42: Befestigungsvorrichtung
- 44: Wand
- 46: Audioausgabeeinheit
- 48: Bedienelement
- 50: Beleuchtungseinheit
- 52: Entfeuchtungseinheit
- 54: Digitaluhr
- 55: Markierung auf der Spiegelfläche
- 56: zweites Halteelement des externen Anzeigegeräts

## Patentansprüche

1. Spiegel (10), insbesondere ein Wandspiegel, mit einer reflektierenden Spiegelfläche (12) und vorzugsweise einer integrierten Anzeigeeinheit (14), wobei der Spiegel (10) eine Befestigungsvorrichtung (42) zur ortsfesten Montage und eine Steuereinheit (16) mit Stromversorgungseinheit auf einer Rückseite aufweist,
**dadurch gekennzeichnet,**
**dass** der Spiegel (10) zumindest in einem ersten Teilbereich (18) der Spiegelfläche (12) ein Schnittstellenelement (20) mit Haltemitteln (22) und/oder kabellosen Lademitteln (24) für ein externes Anzeigegerät (26) aufweist, insbesondere ein Smartphone oder ein Tablet, um das externe Anzeigegerät (26) im montierten Zustand auf der Spiegelfläche (12) zu halten und/oder mittels der Stromversorgungseinheit zu laden.

2. Spiegel nach dem Anspruch 1,
**dadurch gekennzeichnet,**
**dass** innerhalb der reflektierenden Spiegelfläche (12) des Spiegels (10) ein nicht reflektierender oder teilreflektierender und bevorzugt blickdurchlässiger zweiter Teilbereich (30) angeordnet ist, wobei auf der Rückseite des Spiegels (10) in dem zweiten Teilbereich (30) eine Anzeigeeinheit (14), insbesondere ein elektronisches Display, angeordnet ist und wobei das Schnittstellenelement (20) außerhalb des zweiten Teilbereichs (30) angeordnet ist.

3. Spiegel nach dem Anspruch 1 oder 2,
**dadurch gekennzeichnet,**
**dass** der Spiegel (10) eine Datenempfängereinheit (32) aufweist, insbesondere einen Bluetooth oder Wifi Datenempfänger, die mit der Steuereinheit (16) verbunden ist, um drahtlos Datensignale, insbesondere Audio- und/oder Videosignale und/oder Steuerungssignale, von dem externen Anzeigegerät (26) zu empfangen.

4. Spiegel nach einem der Ansprüche 2 oder 3,
**dadurch gekennzeichnet,**
**dass** die Steuereinheit (16) zur Verarbeitung von Videosignalen ausgebildet ist, die von dem externen Anzeigegerät (26), vorzugsweise drahtlos, bereitgestellt sind, insbesondere Bildschirminformationen, um die Videosignale in einer Größe skaliert auf der Anzeigeeinheit (14) des Spiegels (10) darzustellen.

5. Spiegel nach einem der Ansprüche 1 bis 4,
**dadurch gekennzeichnet,**
**dass** die Haltemittel (22) des Schnittstellenelements (20) zumindest ein erstes magnetisches oder metallisches Halteelement (23) auf der Rückseite des Spiegels (10) aufweisen, um mit dem externen Anzeigegerät (26) und/oder einer Haltevorrichtung des externen Anzeigegeräts (26) auf der Spiegelfläche (12) magnetisch zusammenzuwirken.

6. Spiegel nach einem der Ansprüche 1 bis 5,
**dadurch gekennzeichnet,**
**dass** die Lademittel (24) des Schnittstellenelements (20) auf der Rückseite des Spiegels (10) angeordnet und als zumindest ein drahtloser Leistungslader ausgebildet sind, insbesondere mit Spulenmitteln (25) zum induktiven Laden des externen Anzeigegeräts (26).

7. Spiegel nach einem der Ansprüche 1 bis 6,
**dadurch gekennzeichnet,**
**dass** die Haltemittel (22) und/oder die Lademittel (24) an wenigstens zwei festen Positionen (34) auf der Rückseite des Spiegels (10) angeordnet sind, vorzugsweise in Ecken der Spiegelfläche (12).

8. Spiegel nach einem der Ansprüche 1 bis 7,
**dadurch gekennzeichnet,**
**dass** die Haltemittel (22) großflächig oder zumindest angrenzend an die Lademittel (24) auf der Rückseite des Spiegels (10) ausgebildet sind, wobei die Haltemittel (22) einen Ausschnittsbereich (36) ausbilden, in denen die Lademittel (24) angeordnet sind, um eine Abdecken und eine Störung der Lademittel (24), insbesondere durch magnetische oder metallische Haltemittel (22), zu vermeiden.

9. Spiegel nach einem der Ansprüche 1 bis 8,
**dadurch gekennzeichnet,**
**dass** der Spiegel (10) eine großflächige Spiegelfläche (12) aufweist, insbesondere eine Spiegelfläche (12) von wenigstens 1m×1m.

10. Spiegel nach einem der Ansprüche 1 bis 9,
**dadurch gekennzeichnet,**
**dass** die Steuereinheit (16) zur Verarbeitung von Audiosignalen ausgebildet ist, die von dem externen Anzeigegerät (26), vorzugsweise drahtlos, bereitgestellt sind, wobei der Spiegel (10) einen mit der Steuereinheit (16) verbundenen Audioverstärker (38) aufweist, um das Audiosignal mittels einer internen und/oder externen Audioausgabeeinheit (46), insbesondere einem Lautsprecher, abzuspielen.

11. Spiegel nach einem der Ansprüche 1 bis 10,
**dadurch gekennzeichnet,**
**dass** die Steuereinheit (16) zur Verarbeitung von Steuersignalen ausgebildet ist, die von dem externen Anzeigegerät (26), vorzugsweise drahtlos, bereitgestellt sind, vorzugsweise Steuersignale einer softwarebasierten Applikation, um unmittelbar elektronische Geräte des Spiegels (10) zu steuern, insbesondere eine Ladeleistung der Lademittel (24), eine Lautstärke einer Audioausgabeeinheit und/oder der dargestellten Informationen auf einer Anzeigeeinheit (14).

12. Spiegel nach einem der Ansprüche 1 bis 11,
**dadurch gekennzeichnet,**
**dass** die Steuereinheit (16) mit Stromversorgung, die Haltemittel (22) und/oder die Lademittel (24) Verbindungsmittel, insbesondere stoffschlüssige Verbindungsmittel, aufweisen, um einen vorhandenen Spiegel (10) nachzurüsten.

13. Externes Anzeigegerät (26) mit einem Spiegel (10) nach einem der Ansprüche 1 bis 12, wobei das externe Anzeigegerät (26) mit zweiten metallischen oder magnetischen Halteelementen (56) verbunden ist und/oder eine Haltevorrichtung aufweist, um mit Haltemitteln (22) des Spiegels (10) zusammenzuwirken und auf der Spiegelfläche (12) gehalten zu werden.

14. Externes Anzeigegerät (26) mit einem Spiegel (10) nach dem Anspruch 13, wobei das externe Anzeigegerät (26) einen Akkumulator aufweist, der induktiv mittels Lademitteln (24) des Spiegels (10) aufladbar ist.

15. Verfahren zur Bedienung eines Spiegels nach einem der Ansprüche 1 bis 12, wobei eine Bedienperson (40) ein Datensignal, insbesondere ein Audio-, ein Video- und/oder ein Steuersignal, mittels des externen Anzeigegeräts (26) auswählt und/oder erzeugt und an die Steuereinheit (16) des Spiegels (10) sendet, insbesondere mittels einer softwarebasierten Applikation auf einem Smartphone, um unmittelbar die Steuereinheit (16) und damit verbundenen elektronische Geräte des Spiegels (10) zu steuern, insbesondere eine Ladeleistung der Lademittel (24), eine Lautstärke einer Audioausgabe und/oder der dargestellten Informationen auf einer Anzeigeeinheit (14).
